# EUROPEAN PATENT APPLICATION

(11) **EP 4 477 718 A1**
(43) Date of publication of application: **18.12.2024**
(21) Application number: 23179812.5
(22) Date of filing: 16.06.2023
(51) Int. Cl.: C09D 5/18, C09D 4/00, C09D 7/61, C09D 163/00, C09D 179/02

(54) **INTUMESCENT COATINGS BASED ON POLY-AZA MICHAEL ADDITION CHEMISTRY**

(71) Applicant: Sherwin-Williams Coatings Deutschland GmbH, 42389 Wuppertal (DE)
(72) Inventor: VIERTEL, Johannes, 42389 Wuppertal (DE); SCHULZE, Gerd, 42389 Wuppertal (DE); ZIPPERLEN, Sabine, 42389 Wuppertal (DE)
(74) Representative: Vossius & Partner Patentanwälte Rechtsanwälte mbB

(57) **Abstract**

A fast curing intumescent coating composition comprises a component **A** and a component **B,**
wherein the component **A** comprises at least one (meth)acrylate compound **AcC** having one or more acryloyl groups (CH₂=CHCO-) and/or methacryloyl groups (CH₂=C(CH₃)CO-) in a molecule; and
wherein the component **B** comprises an amine compound **AmC** comprising at least one amine group selected from primary amine groups, secondary amine groups and/or blocked amine groups;
wherein the intumescent coating composition further comprises:
- from 10 - 70 wt.-%, based on the total weight of the intumescent coating composition, of at least one acid source;

wherein the sum of the acrylate compound **AcC** and the amine compound **AmC (AcC** + **AmC)** is from 10 - 50 wt.-%, based on the total weight of the intumescent coating composition; and
wherein the molar ratio of the acryloyl groups (CH₂=CHCO-) and methacryloyl groups (CH₂=C(CH₃)CO-) of the **AcC** and the potentially present epoxy groups of the at least one epoxy resin **EP** to the amine groups of the amine compound **AmC** is from 0.5 - 1.5.

## Description

### Technical field

The invention pertains to the field of intumescent coating compositions. Additionally, the invention is related to the use of an intumescent coating composition for protecting components against heat in the event of a fire, a method for protecting components and a coated component obtainable from the method.

### Prior art

Intumescent coatings are coatings which, when exposed to heat, for example, in the event of a fire, foam to form a carbonaceous char of high thermal insulation. A component coated with an intumescent coating, for example, a steel beam or column in a building, is protected from rapidly increasing temperatures for a period of time by the passive fire protection coating. Due to, for example, at least the insulating effect of the coating, the temperature increase of the component to above a critical temperature (>500°C) is delayed. This provides, for example, a longer period to the evacuate of people from the building and engage fire-fighting measures, before the component can fail. Building regulations in many countries demand appropriate fire protection of load bearing structures, such as steel columns, beams, tension rods, and the like to a specified time of protection, known in the industry as F-class. According to DIN 4102-2, the number in F-class stands for the approved duration in minutes over which the fire protection system enables the individual component to withstand a fire without losing its load bearing capability. The approval of these products indicate the specific coating film thickness necessary to protect the individual component for a certain F-class, or protection time.

There are various intumescent coating products on the market today, which are in particular based on the following technologies: (i) Single-pack, waterborne coatings e.g. based on vinyl acetate dispersions as the coatings binder, (ii) two-pack coatings formulations, based on epoxy resins and amine hardeners in the second component, (iii) two-pack polyurethane- or polyaspartic-based compositions curable with isocyanates, (iv) multi-pack poly(methyl methacrylate) (PMMA) compositions curable with organic peroxides, (v) single and two-pack polysiloxanes.

An example for (ii) is described in EP 3 527 605 A1 (Nippon Steel Chemical & Material CO. Ltd.) including a resin composition that is suitable for fiber-reinforced composite materials used to produce molded articles having high heat resistance. Specifically, a two-pack resin composition for fiber-reinforced composite materials is configured of a base material including an epoxy resin (A) and a (meth)acrylate compound (B) having three or more (meth)acryloyl groups in a molecule, and a curing agent including an amine compound (C) represented by the following general formula: X-(CH₂NH₂) whereby X represents an n-valent organic group having 1 to 16 carbon atoms; and n represents 2 or 3. Thereby, a mass ratio of the base material to the curing agent is within the range of from 85 : 15 to 65 : 35, wherein the epoxy resin (A) includes 75% by mass to 100% by mass of a bisphenol A epoxy resin; the base material has a viscosity of 10,000 mPa·s or less; and the curing agent has a viscosity of 800 mPa·s or less.

Hereafter, the mentioning of "weight percent" ("wt. %") are based on the liquid product, as provided.

Existing fire protection compositions based on epoxy formulations usually show excellent mechanical properties. However, they are limited with regards to curing speed, UV resistance, and/or practical level of loading with fillers. Aqueous dispersion-based intumescent coatings are mainly restricted by their mechanical weakness and chemical resistance. While PMMA-based intumescent compositions are advantageous in terms of curing speed and loading level with fillers, they are problematic with regard to hazardous components (e.g. storage of peroxide), pungent odor during application, and their multi-pack packaging.

Thus, there is a need to provide improved solutions for intumescent coatings, especially for fast curing, or drying coatings with high resistivity and less hazardous formulations to protect the environment and people.

### Summary of the invention

The present description provides improved solutions for intumescent coatings. Especially, the intumescent coatings described herein mechanically robust, fast curing, UV resistant, and/or devoid of problematic substances to the extent possible. Additionally, the intumescent coatings are suitable for a wide variety of applications and are preferably derived from readily available and inexpensive raw materials.

The composition described herein is based on a combination of at least one acrylate compound **AcC,** an amine compound **AmC** and a specific functional filler package for improved fire protection performance, which may be partially dispersed in AcC and/or AmC. Additional components may be present to adapt the intumescent coating composition to specific requirements and applications.

Surprisingly, it was found that the combination of the different components allows for producing intumescent coating compositions having a fast curing speed, good UV resistance, and light stability, which is favorable when compared with known epoxy-based compositions.

Without being bound by theory, it is believed that this is inter alia due to the relatively fast Michael addition reaction between the acrylate compound **AcC** and the amine group(s) of the amine compound **AmC,** resulting in acrylate-amine adducts. This is in particular true for primary amine group(s).

Furthermore, the mechanical stability and price of the required raw material is comparable to known epoxy-based compositions. Since the invented coatings are not based on PMMA chemistry, use , radical-cure starters (e.g. peroxides) and can also be formulated without isocyanates, an advantageous hazard classification and safer handling is possible, avoiding storage issues of its different components.

Additionally, it was found that the compositions described herein are suitable for various applications ranging inter alia from fire protection, corrosion protection, and flooring. Thereby, standard product application is possible. Thus, there is no need for customers to change established workflows or to acquire special equipment.

Further aspects of the description provided herein are subjects of the further independent claims. Particularly preferred embodiments of the invention are subjects of the dependent claims.

### Embodiments of the invention

A subject of the invention is an intumescent coating composition comprising a component **A** and a component **B.**

In some embodiments, the component **A** comprises at least one monomeric, oligomeric or polymeric acrylate compound **AcC** having one or more acryloyl groups (CH₂=CHCO-) and/or methacryloyl groups (CH₂=C(CH₃)CO-) in a molecule. Acrylate compound **AcC** is also referred to as acrylate binder.

Suitable acrylic binders are acrylates or methacrylates with one, two, or more (meth)acrylate groups, especially the ones with low viscosities at room temperature. In a preferred aspect, suitable acrylic binders are at least one (meth)acrylate with two or more functional groups. Suitable acrylates are based on, but not limited to methyl acrylate, ethyl acrylate, butyl acrylate, n-Amyl acrylate, isobornyl acrylate, isobutyl acrylate, tert-Butyl acrylate, hexyl acrylate, 2-ethylhexyl acrylate, 3,5,5-trimethylhexyl acrylate, 2-methoxyethyl acrylate, 2-phenoxyethyl acrylate, 4-tert-butylcyclohexyl acrylate, octyl acrylate, isodecyl acrylate, decyl acrylate, lauryl acrylate, tridecyl acrylate, octadecyl acrylate, behenyl acrylate, modifications or combinations thereof, further examples are diethylenglycoldi(meth)acrylate, triethylenglycoldi(meth)acrylate, or higher polyethylenglycoldi(meth)acrylates, dipropylenglykoldi(meth)acrylate, tripropylenglycoldi(meth)acrylate, or higher polypropylenglycoldi(methacrylates), butanedioldi(meth)acrylate, hexanedioldi(meth)acrylate, dodecandioldi(meth)acrylate, glycerinedi(meth)acrylate, or trimethylolpropanetri(meth)acrylate, especially suitable is trimethylolpropanetriacrylate, derivatives thereof or other acryloyl functional molecules but not limited to, as well as combinations. These acrylates offer low viscosities and favourable curing properties.

Especially, the at least one acrylate compound **AcC** has one or more acryloyl groups (CH₂=CHCO-) in the molecule. In particular, the at least one acrylate compound **AcC** has at least 2, preferably 2-4, acryloyl groups (CH₂=CHCO-) in the molecule.

In particular, a proportion of acryloyl groups (CH₂=CHCO-) to methacryloyl groups (CH₂=C(CH₃)CO-) in component **A** is at least 2, especially at least 3, in particular at least 5.

Especially, the acrylate compound **AcC** is an acrylate monomer, but in some embodiments, may also be an acrylate oligomer or polymer, such as, for example, and without limitation, epoxy acrylate, polyester acrylate, urethane acrylate, acrylic acrylate, a melamine acrylate, or derivatives and combinations thereof.

Preferably, the at least one acrylate compound **AcC** does not contain an acid group, especially selected from the group consisting of a carboxyl group, a phosphoric acid group and/or a sulfonic acid group.

Preferably, the at least one acrylate compound **AcC** does not contain an NH₂ group.

In particular, the at least one acrylate compound **AcC** does not contain an acid group and an NH₂ group.

Preferably, the at least one acrylate compound **AcC** is based on an aliphatic backbone that can contain ester and/or ether groups in the backbone.

Preferably, the at least one acrylate compound **AcC** is based on a polyol, preferably selected from but not limited to the list consisting of hexane diol, glycerin, trimethylolpropane, isoborneol, ditrimethylolpropane, pentaerythritol, and dipentaerythritol, or an alkoxylated, especially ethoxylated, polyol, said polyol preferably selected from the list consisting of glycerin, trimethylolpropane, ditrimethylolpropane, pentaerythritol and dipentaerythritol.

Most preferably, the at least one acrylate compound **AcC** is selected from hexanediol diacrylate, trimethylolpropane triacrylate, pentaerythritol triacrylate, isoborneol acrylate and/or pentaerythritol tetraacrylate.

In some embodiments, the intumescent composition described herein includes component **B,** wherein the component **B** contains a monomeric, oligomeric or polymeric amine compound **AmC,** comprising at least one amine group selected from primary amine groups, secondary amine groups and blocked amine groups and/or at least one blocked amine group, whereby the amine compound **AmC** preferably is a compound of the formula (Ia), (Ib) and (Ic) ;

X-(CH₂NH₂)ₙ (Ia)

X-(NHCH₂)ₘ (lb)

X-(CH₂)₃N (Ic)

wherein X represents an n-valent organic group having 1 to 80, preferably 1 to 16, carbon atoms and n represents a number between 1 and 10, preferably between 1 and 3; Preferably, X in the general formula (la, b, c) is selected from the group consisting of an n-valent hydrocarbon group having an alicyclic structure having 6 or more carbon atoms, an n-valent hydrocarbon group having an aromatic ring structure, an n-valent hydrocarbon group having an araliphatic structure, an n-valent hydrocarbon group having an aliphatic structure and an n-valent polyether group, wherein the before mentioned n-valent hydrocarbon groups may have at least one secondary amine structure inside thereof.

In particular, the amine compound **AmC** may be represented by following formula (II), (III), (IV), (V), (VI), (VII) and/or (VIII):

| | |
|---|---|
| 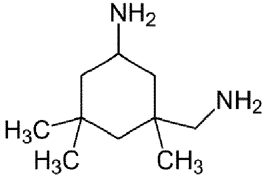 | (II) |
| 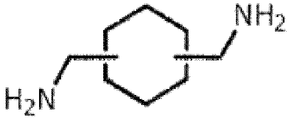 | (III) |
| 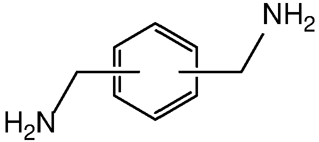 | (IV) |
| 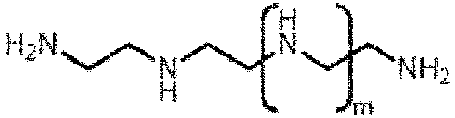 | (V) |
| 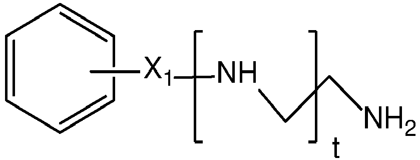 | (VI) |
| 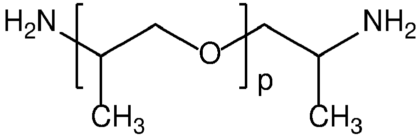 | (VII) |
| 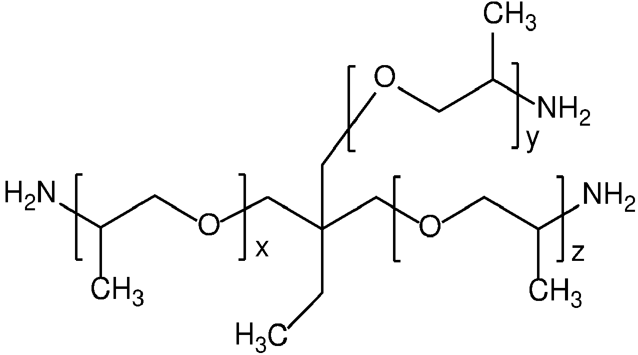 | (VIII) |

wherein m represents a number between 0 and 6, preferably between 2 and 3, p represents a number between 1 and 10, preferably between 2 and 3, t represents a number between 0 and 10, preferably 1, and the sum of (x + y + z) represents a number between 3 and 20, preferably between 5 and 6, and X₁ represents an n-valent organic group having 1 to 10 carbon atoms, preferably X₁ is CH₃.

Particularly preferred, the amine compound **AmC** is represented by formula (II), (III), (IV), (V) and/or (VI).

Substance (VI) can for example be produced by reacting benzaldehyde with a primary alkyl diamine, e.g. 1 ,2-diaminoethane or 1 ,3-diaminopropane, as described on page 34, line 5 - page 35, I. 20 of WO 2017/046293 A1

Suitable amine hardeners can be any amino functional species, primary, secondary or tertiary amines, Mannich bases, or adduct thereof, oligoamines, lected from this list, but not limited to polyamidoamines, polyetheramines, polyalkyenamines (DETA, TETA), phenalkamines, aliphatic primary amines (isophoronediamine, 1,3-Bis(aminomethyl)benzol such as mentioned in US 10,442,937 or US 10,131,800. Other protective coatings, without fire protection properties, containing N-bezyl-1 ,2-ethandiamin as a hardener component are described in EP 3344677 and exhibit good cure, without defects such as blushing, at low temperatures. More possible hardeners are diethylene triamine, triethylene tetramine, tetraethylene pentaamine, polyamidoamine, isophorone diamine, m-xylenediamine, 1,3-bis(aminomethyl)cyclohexane, bis(4-aminocyclohexyl)methane, N-aminoethyl piperazine, m-phenylene diamine, which can be used on their own or in combinations. Formulated, polymeric, amino functional hardeners such as, but not limited to, brand names Ancamine by Evonik, or Dow Epoxy Hardner (D.E.H.) by Olin can be utilized on their own, or in combination with any of the above mentioned examples.

In an embodiment, the intumescent coating composition described is a composition wherein the sum of the acrylate compound **AcC** and the amine compound **AmC, (AcC** + **AmC)** is from 5-80wt.%, preferably 10-50 wt.-%, based on the total weight of the intumescent coating composition; and
wherein the molar ratio of the acryloyl groups (CH₂=CHCO-) of the acrylate compound **AcC** and the potentially present epoxy groups of the at least one epoxy resin **EP** to the amine groups of the amine compound **AmC** is from 0.5 - 1.5 preferably 0.75 - 1.25, resembling the stoichiometric ratio.

Optionally, the intumescent coating composition may comprise >0 -100 wt.-%, especially 0 - 50 wt.-%, most preferred 0 wt-% based on the total weight of the acrylate compound **AcC,** of at least one epoxy resin **EP,** preferably a liquid epoxy resin.

In particular, the composition does not necessarily comprise an epoxy resin **EP.** However, according to special embodiments, an epoxy resin **EP** may be present.

Suitable as epoxy resin, which may optionally be present in the composition, are commercial technical epoxy resins. These are obtained in a known manner, as for example from the oxidation of the corresponding olefins or from the reaction of epichlorohydrin with the corresponding polyols, polyphenols or amines.

Particularly suitable as epoxy resin are what are called liquid polyepoxy resins, referred to hereinafter as "liquid epoxy resin". These have a glass transition temperature below 25°C and an average molecular weight of >700.

Likewise possible as epoxy resin are what are called solid resins, which have a glass transition temperature above 25°C and can be dissolved in appropriate solvents, or reactive thinners in order to be handled as a liquid .

Suitable epoxy resins are, in particular, aromatic epoxy resins, more particularly the glycidylization products of:
- bisphenol A, bisphenol F or bisphenol A/F, where A stands for acetone and F for formaldehyde, which served as reactants in the preparation of these bisphenols. In the case of bisphenol F, there may also be positional isomers present, derived more particularly from 2,4'- or 2,2'-hydroxyphenylmethane.
- dihydroxybenzene derivatives such as resorcinol, hydroquinone or pyrochatechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol-TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxybiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether or bis(4-hydroxyphenyl) sulfone;
- condensation products of phenols with formaldehyde which are obtained under acidic conditions, such as phenol novolaks or cresol novolaks, also called bisphenol F novolaks;
- aromatic amines, such as aniline, toluidine, 4-aminophenol, 4,4'-methylenediphenyldiamine, 4,4'-methylenediphenyldi-(N-methyl)amine, 4,4'-[1,4-phenylenebis(1-methylethylidene)]bisaniline (bisaniline P) or 4,4'-[1,3-phenylenebis(1-methylethylidene)]bisaniline (bisaniline M) and derivative thereof but not limited to, can involve combinations.

Further suitable epoxy resins are aliphatic or cycloaliphatic polyepoxides, more particularly
- glycidyl ethers of saturated or unsaturated, branched or unbranched, cyclic or open-chain di-, tri- or tetra-functional C₂ to C₃₀ alcohols, especially ethylene glycol, propylene glycol, butylene glycol, hexanediol, octanediol, polypropylene glycols, dimethylolcyclohexane, neopentyl glycol, dibromoneopentyl glycol, castor oil, trimethylolpropane, trimethylolethane, pentaerythritol, sorbitol or glycerol, or alkoxylated glycerol or alkoxylated trimethylolpropane;
- a hydrogenated bisphenol A, F or A/F liquid resin, or the glycidylation products of hydrogenated bisphenol A, For A/F;
- a N-glycidyl derivative of amides or heterocyclic nitrogen bases, such as triglycidyl cyanurate or triglycidyl isocyanurate, or reaction products of epichlorohydrin with hydantoin.
- epoxy resins from the oxidation of olefins, such as, in particular, vinylcyclohexene, dicyclopentadiene, cyclohexadiene, cyclododecadiene, cyclododecatriene isoprene, 1 ,5-hexadiene, butadiene, polybutadiene or divinylbenzene and derivative thereof but not limited to, can involve combinations.

A preferred epoxy resin is a liquid resin based on a bisphenol, more particularly a diglycidyl ether of bisphenol A, bisphenol F or bisphenol A/F, in particular of the kind available commercially, for example, from Dow, Huntsman or Momentive. These liquid resins have a low viscosity for epoxy resins and in the cured state exhibit good coating properties. They may include fractions of solid bisphenol A, bisphenol F, or novolak resins.

In some embodiments, the intumescent coating composition described herein further comprises:
- from 10 - 70 wt.-%, based on the total weight of the intumescent coating composition, of at least one acid source, acting as charring agent, selected from, but not limited to, the list consisting of ammonium phosphate, ammonium pyrophosphate, ammonium polyphosphate, melamine phosphate, magnesium sulphate, sodium, potassium or ammonium phosphate or sulphate salts, para-toluene sulphonic acid, or boric acid, borate salts, ammonium pentaborate, zinc borate, sodium borate, lithium borate, aluminium borate and magnesiumborate. and boro-silicates, preferably ammonium polyphosphate;
- preferably 0 - 15 wt.-%, based on the total weight of the intumescent coating composition, of at least one carbon source for char promotion, selected from but not limited to the group consisting of polyhydroxy compounds like pentaerythritol, dipentaerythritol, tripentaerythritol, polycondensates of pentaerythritol and pentaerythritol-based esters and polyols like Xylitol, Sorbitol or Mannitol, preferably pentaerythritol and/or dipentaerythritol, derivatives or combinations thereof;
- optionally >0 - 40 wt.-%, especially 0 - 20 wt.-%, most preferred 0 wt.-% based on the total weight of the acrylate compound **AcC,** of at least one additive **Sol** selected from solvents and plasticizers, preferably selected from the list consisting of, but not limited to xylene, isobutanol, benzyl alcohol, other alcohols, acetates, ketones, or other organic solvents.

Optionally, the composition comprises a polyhydroxy compound like pentaerythritol, dipentaerythritol, tripentaerythritol, polycondensates of pentaerythritol and pentaerythritol-based esters and/ or polyols like Xylitol, Sorbitol, Mannitol, preferably pentaerythritol and/or dipentaerythritol.

Preferably the composition contains 0-20 wt.-%, based on the total weight of the intumescent coating composition, of at least one gas producing, spumific compound selected from the group of melamin (1,3,5-Triazin-2,4,6-triamin), hexamethoxymethylmelamine, melamincyanurates, melam in monophosphate, melaminpolyphosphaten, melaminpyrophosphaten, urea containing compounds, cyanuric or isocyanuric acid or its derivatives, cyanamide, dicyanamide, azodicarbonamide, guanidine and its salts, biguanide, cyanuric acid salts, cyanuric acid esters and amides, dimelaminepyrophosphate, and derivative thereof but not limited to, can involve combinations. Most preferred is melamin.

The intumescent coating composition, after mixing the component **A** with the component **B** for 10 seconds at 23°C has a viscosity at 23°C of 0,1 - 30 Pa·s, preferably 1 to 20 Pa·s,in particular 1,5 to 10 Pa·s,measured by means of a plate-plate viscometer at a shear rate of 100 s⁻¹. Such viscosities are highly suitable for different applications. If desired, the viscosity can for example be adjusted with the additive **Sol.**

Especially, the intumescent coating composition contains less than 1 wt.-%, preferably less than 0.1 wt.-%, more preferably less than 0.001 wt.-%, most preferrably 0 wt.%, based on the total weight of the intumescent coating composition, of at least one radically-polymerizable initiator, especially an azo compound which generates radicals on heating or organic peroxides.

According to another preferred embodiment, the intumescent coating composition further comprises 0 - 40 wt.-%, preferably between 5 - 30 wt.-%, based on the total weight of the intumescent coating composition, of at least one inorganic filler.

The inorganic filler, or more than one filler is preferably selected from the group consisting, but not limited to, of barite (barite), talc, quartz flour, quartz sand, silicon carbide, iron mica, dolomite, wollastonite, colemanite, kaolin, mica (potassium aluminum silicate), molecular sieve, aluminum oxide, zinc oxide, aluminum hydroxide, magnesium hydroxide, silica, cement, gypsum, fly ash, soot, graphite, graphene, organic or inorganic fibers and hollow spheres, especially talc, quartz powder, kaolin, titanium dioxide, silicate glass flakes or spheres and aluminum trihydroxide, or modifications or combinations thereof.

For improved char stability fibers, such as, but not limited to, mineral fibers based on SiO2, CaO, MgO and Al2O3, carbon based fibers, or mixtures or combinations thereof, may be present in the formulation between 0,1 and 15% of the total formulation or combinations thereof.

Those skilled in the art know that there may arise the need to use additional components known as additives to fine tune certain properties of component A or component B or both of them.

These may comprise but are not limited to agents for rheology control, dispersing aids, wetting agents, levelling agents, adhesion promoters, defoamers and deaerators, flame retardants.

Agents for rheology control are used for example but without limitation to improve sagging resistance meaning allowing a higher layer thickness to be applied in one layer, to improve settling in a wet coating composition, meaning that the different components in a wet paint do not separate during storage or transport and so on. They comprise for example but are not limited to modified castor oil derivatives, amid waxes, organic modified layered silicas, fumed silica. They can be used on their own or any combinations thereof.

Dispersing agents are used for example but without limitation to improve quality of the dispersion, to maintain the achieved quality of dispersion, to reduce viscosity of the coating composition comprising binder composition and filler composition and so on. They comprise for example but without limitation, unsaturated acidic polycarboxylic acid polyester, phosphoric acid esters, modified polyurethanes, polyesters with higher molecular weight, highly branched polyesters. They can be used on their own or any combinations thereof.

Wetting agents are used for example but without limitation to improve wetting of surfaces. This includes but is not limited to wetting of solid particles included in an intumescent coating composition or wetting of the surface of any component coated with the ready formulated coatings composition.

They comprise for example but without limitation polyether-modified polydimethylsiloxane. They can be used on their own or in any combinations thereof.

Levelling agents are used for example but without limitation to improve surface quality of a coating composition applied on any component coated with a ready formulated coatings composition. They comprise for example but without limitation polyether- and or polyester modified Polydimethylsiloxanes, or polyacrylates. They can be used on their own or in any combination thereof.

Defoamers and deaerators are used for example but without limitation to remove air entrapped in the liquid coatings composition, either component A or component B or both of them. It can also be used to remove air entrapped during the application process of the mixed coatings composition on any component which is coated with the coatings composition.

They comprise for example but are not limited to polysiloxanes, polymethylalkylsiloxanes, polyalkylenethers, polyolefines. They can be used on their own or any combination thereof.

Flame retardants are used for example but without limitation to reduce the flammability of the coatings system, or to scavenge reactive mixtures when applied on a component. They comprise but are not limited to phosphoric acid esters with and without halogen moieties, liquid phosphates, phosphites and phosphonates. Sources of metals or metalloid ions, such as metal oxides, metalloid oxides, metal hydroxides, metalloid hydroxides, metal carbonates, or bicarbonates, metal phosphates, metal chlorides, metal nitrates, metal borates, metal sulphates, metal silicates. They may be present on their own or in any combination, or complexes thereof. The mentioned metals may be selected from, but not limited to Al, B, Ti, Cu, Zn, Mg, Na, Ca, Si, or combinations thereof. Examples used may be, but are not limited to ZnO, ZnPO₄, TiO₂, Al₂O₃, Al(OH)₃, AlPO₄, MgO, MgPO₄.

A further aspect of the present description is directed to the use of an intumescent coating composition as described above for protecting components against heat in the event of a fire. The components may e.g. be components of a building, an infrastructure and/or a vehicle.

The component may for example comprise or consist of:
- glass, glass-ceramic, concrete, mortar, brick, tile, plaster or natural stones such as granite or marble;
- metals or alloys such as aluminum, iron, steel or nonferrous metals, or surface-enhanced metals or alloys such as galvanized or chromed metals;
- leather, textiles, paper, wood, woodbase materials bonded with resins, such as phenolic, melamine or epoxy resins, for example, resin-textile composites, or other polymer composites;
- plastics, especially rigid or flexible PVC, ABS, polycarbonate (PC), polyamide (PA), polyesters, PMMA, epoxy resins, PU, POM, PO, PE, PP, EPM or EPDM, the plastics having optionally been surface-treated by plasma, corona or flame treatment;
- fiber-reinforced plastics, such as carbon fiber-reinforced plastics (CRP), glass fiber-reinforced plastics (GRP) or sheet molding compounds (SMC);
- coated substrates, such as powder-coated, or electro-coated metals or alloys, e.g. for the vehicle construction.

In particular, moreover, the intumescent coating composition can be used as an undercoat, tie coat, or anticorrosion coating.

The fully or partly cured intumescent coating composition may have a further coating, covering or paint applied to it. In this case this further layer may comprise a different material, particularly a polyurethane, polyurea, or polysiloxane coating.

As and when necessary, the components may be pretreated before the intumescent coating composition is applied. Such pretreatments include, in particular, physical and/or chemical cleaning techniques, as for example sanding, sandblasting, shotblasting, brushing and/or blowing, and also, furthermore, treatment with cleaners or solvents, or the application of an adhesion promoter, an adhesion promoter solution or a primer.

A further aspect of the invention is related to a method for protecting a component, especially as described above, comprising the steps:
(i) providing the component,
(ii) if necessary, applying a primer to the surface of the component,
(iii) applying the mixed intumescent coating composition as described above to the optionally primed surface of the component within the pot life,
(iv) if necessary, applying a further layer of the mixed intumescent coating composition as described above to the cured layer within the pot life,
(v) if necessary, repeating step (iv), and
(vi) if necessary, applying a topcoat to the cured intumescent coating composition.

In doing so, the component is protected from corrosion and other environmental degradation, but in particular from heat in the event of a fire.

A suitable component is in particular a steel beam, a support made of steel or concrete, a load-bearing concrete element such as in particular an intermediate floor or ceiling, a component made of word, composite material or plastic such as, in particular, an insulating panel, a support in vehicle construction or a battery box of electric vehicles, a tank for e.g. liquid hydrogen fuel, in particular a fiber reinforced composite tank, a battery box, in particular made of steel, aluminum, or fiber reinforced composite material.

The surface of the component is preferably cleaned, in particular by brushing, blasting, vacuuming or blowing off, and free of oil, grease, cement skin, oxide layers, rust and dusts.

In the event that the intumescent coating is used to repair an already coated component where the old coating is damaged and/or no longer suitable, the surface is preferably prepared in this way that the old coating has been at least partially removed from the surface, e.g. by sweep blasting.

If necessary, a primer is applied to the surface of the component, in particular by spraying, pumping, trowelling or using a brush.

One or two component, epoxy, alkyd, acrylic, based primers, either solvent or water based, 100% solids , with or without zinc oxide, zinc phosphosphate glass, not limited to , two-pack epoxy primers are particularly suitable as primers for steel. Some may contain micaceous iron oxide for improved barrier properties. Such primers enable particularly good corrosion protection properties and excellent adhesion of the subsequent intumescent coating.

Two component epoxy based primers are particularly suitable as primers for concrete. Such a primer binds existing dust, closes the pores and enables excellent adhesion of the subsequent intumescent coating.

For the application of the intumescent coating, in step (iii), the mixed intumescent coating is applied to the optionally primed surface of the component within the pot life. Preferably, the application is carried out by means of a spraying apparatus or with the aid of a brush, roller or of a squeegee, preferably in an airless spraying process, in particular with a plural-feed, or single-feed airless spraying apparatus.

A layer thickness in the range of 0.5 to 2 mm is preferably applied in a single pass.

If necessary, the intumescent coating is applied in more than one layer. Step (iv) is carried out once or several times, waiting in each case until the previous layer has cured sufficiently to produce a dry, non-sticky surface.

Considering all layers, the intumescent coating is preferably applied in a layer thickness in the range of 0.5 to 10 mm, preferably 1 to 8 mm, in particular 2 to 6 mm.

Preferably, the intumescent coating is applied in more than one work step. For a desired layer thickness of, for example, 5 mm, it is preferable to apply layers with a thickness of just under 1.7 mm three times.

If necessary, a topcoat is applied to the cured intumescent coating. This is particularly preferred if the cured intumescent coating remains clearly visible and is to have a particularly decorative, color-stable appearance.

Topcoats can be based on polyurethane, polyaspartic, acrylic, polysiloxane, or silicone, PVDF, alkyd, or any modification or hybrid thereof are particularly suitable as topcoats.

As still further aspect of the invention is directed to a coated component obtainable or obtained by the method as described above.

The coated component is in particular a steel beam, a support made of steel or concrete, a load-bearing concrete element such as in particular an intermediate floor or a ceiling, a component made of plastic such as in particular an insulating panel, support in vehicle construction or a battery box of electric vehicles, in particular a battery box made of steel or aluminum.

The coating preferably has a layer thickness in the range of 0 to 50 mm, preferably 0.01 to 30 mm, in particular 0.1 to 20 mm, depending on the component material and dimensions.

When exposed to high heat in case of fire, a hard, stable, volume-multiplied, porous material with surprisingly high thermal insulation is formed from the coating as described above.

A further aspect of the present invention is related to a coated article made by the method as described herein.

Another still aspect of the present invention is related to a coated article, comprising a component with the intumescent coating composition as described herein and applied thereon to protect the component from heat in the even of a fire, said component for example being selected from weight bearing metal members, concrete, wood, electrical systems, tanks and/or vehicle parts, against heat in the event of a fire.

Thereby, for example, the fire is selected from a cellulosic-, hydrocarbon-, jet-, pool-, battery, or other specified and non- specified fire scenarios.

A coating in this context refers to two-dimensionally applied coverings of all kinds, especially paints, varnishes, seals, priming coats or primers, floor coverings or protective coatings, including in particular those for heavy-duty applications. With particular advantage the coating composition is formulated as a low-emission coating that can carry eco-quality labels, according for example to Emicode (EC1 Plus), AgBB, DIBt, Der Blaue Engel, AFSSET, RTS (M1), and US Green Building Council (LEED).

Substance names beginning with "poly", such as polyamine, polyol or polyepoxide, denote substances which formally contain per molecule two or more of the functional groups that occur in their name.

The term "viscosity" in the present document refers to the dynamic viscosity or shear viscosity, which is defined by the ratio between the shear stress and the shear rate (rate gradient) and is determined as described in the working examples.

A "blocked amine group" is meant to be but not limited to an aldimine or ketimine group. These are condensation products of primary amine groups and aldehydes or ketones, respectively. Aldimines and ketimines can hydrolyze to form the corresponding amines and aldehydes or ketones, respectively. Therefore, they can be regarded as amines in protected form. Using amine compounds **AmC** with blocked amines usually reduces the curing speed of the intumescent coating composition.

The at least one amine group in particular is a primary and/or a secondary amine group. Most preferred are primary amine groups due to fast reaction with the acrylate compound. In this document, the term "primary amine group" refers to an NH₂-group bound to an organic moiety, and the term "secondary amine group" refers to an NH-group bound to two organic moieties which together may be part of a ring.

"Molecular weight" is understood in the present document to be the molar mass (in grams per mole) of a molecule. "Average molecular weight" is the numerical average Mₙ of an oligomeric or polymeric mixture of molecules and is determined customarily by means of gel permeation chromatography (GPC) against polystyrene as standard.

The acid source of the composition is added to initiate decomposition of the reacted compounds **A** and **B** and/or an optional supplemental carbon source in the event of heat exposure, especially in the event of fire. As it turned out, ammonium phosphate, ammonium pyrophosphate, ammonium polyphosphate, melamine phosphate, magnesium sulphate and boric acid are highly suitable in combination with the compounds **A** and **B.**

### Examples

Set out below are working examples which are intended to elucidate in more detail the invention described. The invention is of course not confined to these working examples described.

### Substances used:

| | |
|---|---|
| TMPTA | Trimethylol propane triacrylat (Sartomer SR 351; Arkema) |
| HDDA | 1,6-hexanediol diacrylate (Sartomer SR 238; Arkema) |
| 1,3-BAC | 1,3-Bis(aminomethyl)cyclohexan, AHEW (amine hydrogen equivalent weight) 35.5 g/eq (von Mitsubishi Gas Chemical) |
| Anc. 350 A | Ancamide@ 350A is a polyamide based on dimer acid, tall oil fatty acid and triethylene tetramine (Air Products and Chemicals, Inc) |
| F resin | bisphenol F diglycidyl ether (Araldite^{®} PY 306; Huntsman) |

### Production of intumescent coatings

Intumescent coatings **A** - **E** were produced as follows: The acrylate compounds **AcC** and optionally the epoxy resin **EP** were mixed **with the** proportions given in table 1 and provided as a first component. Likewise, the amine compound **AmC** and optionally the additive **Sol** were provided as a second component.. Coating E is a comparative example, which is not according to the invention.

Subsequently the two components were mixed in the proportions stated in table 1 and processed to a homogeneous liquid. The so obtained mixture was tested immediately as follows:
To test the **intumescence properties,** an upright I-shaped section (= component, open column) made of steel with the dimensions height x width x length = 100 cm x 16 cm x 16 cm, a wall thickness of 13 mm and a ratio of circumference/cross-sectional area of 160 was provided.

This was coated with a two-component epoxy resin micaceous iron oxide coating (dry film thickness ca. 40µm) and kept in a standard climate for 24 hours. Then thermal sensors were placed centrally on each of the primed inner sides of the I-section profile, a total of 6 piece. Subsequently, the respective intumescent coating was applied to the entire component by applying three layers of just under 1.7 mm each with a waiting time of 24 hours between the layers using a brush in such a way that the component was finally completely coated with a thickness of 5 mm of the respective intumescent coating, which covered the attached thermal sensors.

After a storage period of 3 days in a standard climate, the coated component was then subjected to a fire test in a furnace in accordance with DIN 4102 Part 2, whereby the temperature of the component (= mean value from the 6 thermocouples) was recorded as a function of time via the attached thermocouples.

The **viscosity** of low-viscosity samples (below 150 mPa·s) was measured on a temperature controlled cone/plate rheometer, Anton Paar Physica MCR 300 (cone diameter 50 mm, cone angle 2°, cone tip/plate distance 0.05 mm, shear rate 100 s⁻¹).

The **pot life** was determined as the time until the viscosity doubles.

As a measure of the **curing speed,** the time to reach different drying stages drying stages 1, 6 and 7 under standard climate conditions according to DIN EN ISO 291 (23°C/50%rH), as described in DIN EN ISO 9117-5:2012 were determined.

**Table 1**

| **Ex.** | **A** | **B** | **C** | **D** | **E** |
|---|---|---|---|---|---|
| **AcC** | TMPTA/ HDDA (1:2)^{#} | TMPTA/ HDDA (2:1)^{#} | TMPTA/ HDDA (2:1)^{#} | TMPTA/ HDDA (2:1)^{#} | TMPTA/ HDDA (2:1)^{#} |
| **AmC** | 1,3-BAC | Anc. 350A | Anc. 350A | 1,3-BAC | Anc. 350A |
| Molar ratio **AcC:AmC^{@}** | 1:1 | 1:1 | 1:1 | 1:1 | 1:2 |
| Additive **Sol** | - | xylene (solvent) | isobutanol (solvent) | - | - |
| Weight ratio **AmC:Sol** | 1:0 | 1:1 | 1:1 | - | 1:0 |
| Epoxy resin **EP** | - | - | - | F resin | - |
| Weight ratio **AcC:EP** | 1:0 | 1:0 | 1:0 | 1:4 | 1:0 |
| Additive | AP1 | AP1 | AP1 | AP1 | AP1 |
| Filler^{&} | FP1 | FP1 | FP1 | FP1 | FP1 |
| T after 30 min [°C] | 338 | 467 | 330 | n/a | n/a |
| Pot life [h:min] | 0:55 | 2:15 | 0:40 | 0:35 | 0:03 |
| Drying stage TG 1* | 9 h | 1.5 h | 1.0 h | 4.0 h | 0.6 h |
| Drying stage TG 6* | 9-13 h | 2.6 h | 1.5 h | 20.0 h | > 1.5 h |
| Drying stage TG 7* | 22-38 h | 4.5 h | 2.75 h | 24.0 h | > 1.5 h |

| | | | | | |
|---|---|---|---|---|---|
| ^{@} = molar ratio of the acryloyl groups (CH₂=CHCO-) and methacryloyl groups (CH₂=C(CH₃)CO-) of the **AcC** and the optionally present epoxy groups of the at least one epoxy resin **EP** to the NH-groups of the amine compound **AmC** ^{#} Molar ratio * 23°C 150 % relative humidity; TG 1 = drying stage 1, TG 6 = drying stage 6 and TG 7 = drying stage 7 according to DIN EN ISO 9117-5 ^{&} FP1 (filler package) 60 wt.-% with respect to the total intumescent coating composition | | | | | |

As evident from the data shown in table 1 coatings **A** - **D** are suitable for use as intumescent coatings. In contrast, Coating **E** having a molar ratio outside the claimed range features a pot life that is too short for practical applications.

## Claims

1. An intumescent coating composition comprising a component **A** and a component **B,**
wherein the component **A** comprises at least of one (meth)acrylate compound **AcC** having one or more acryloyl groups (CH₂=CHCO-) and/or methacryloyl groups (CH₂=C(CH₃)CO-); and
wherein the component **B** comprises an amine compound **AmC** comprising at least one amine group selected from primary amine groups, secondary amine groups and/or blocked amine groups, whereby the amine compound **AmC** preferably is a compound of the formula (Ia);
X-(CH₂NH₂)ₙ (Ia)
wherein X represents an n-valent organic group having 1 to 80, preferably 1 to 16, carbon atoms and n represents a number between 1 and 10, preferably between 1 and 3;
wherein the intumescent coating composition further comprises:
- from 10 - 70 wt.-%, based on the total weight of the intumescent coating composition, of at least one acid source selected from the list consisting of ammonium phosphate, ammonium pyrophosphate, ammonium polyphosphate, melamine phosphate, magnesium sulphate and boric acid, preferably ammonium polyphosphate and/or derivative thereof but not limited to, can involve combinations.
- preferably the composition comprises 0 - 15 wt.-%, based on the total weight of the intumescent coating composition, of at least one compound selected from the group of polyhydroxy compounds like pentaerythritol, dipentaerythritol, tripentaerythritol, polycondensates of pentaerythritol and pentaerythritol-based esters and/ or polyols like Xylitol, Sorbitol, Mannitol, preferably pentaerythritol and/or derivative thereof but not limited to, can involve combinations;
- preferably the composition contains 0-20 wt.-%, based on the total weight of the intumescent coating composition, of at least one (spumific) compound selected e.g. from the group of, but is not limited to melamin (1,3,5-Triazin-2,4,6-triamin), hexamethoxymethylmelamine, melamincyanurates, melaminmonophosphate, melaminpolyphosphaten, melaminpyrophosphaten, urea containing compounds, cyanuric or isocyanuric acid or its derivatives, cyanamide, dicyanamide, dicyandiamide, guanidine and its salts, biguanide, cyanuric acid salts, cyanuric acid esters and amides, dimelaminepyrophosphate, derivative thereof but not limited to, can involve combinations. Most preferred is melamin and/or derivative thereof but not limited to, can involve combinations;
- optionally >0 - 100 wt.-%, especially >0 - 50 wt.-%, based on the total weight of the acrylate compound **AcC,** of at least one epoxy resin **EP,** preferably a liquid epoxy resin;
- optionally >0 - 40 wt.-%, especially 0 - 20 wt.-%, most preferred 0 wt.-% based on the total weight of the acrylate compound **AcC,** of at least one additive **Sol** selected from solvents and plasticizers, preferably selected from the list consisting of, but not limited to xylene, isobutanol, other alcohols, acetates, ketones, or other organic solvents
wherein the sum of the acrylate compound **AcC** and the amine compound **AmC (AcC** + **AmC)** is from 10 - 40 wt.-%, based on the total weight of the intumescent coating composition; and
wherein the molar ratio of the acryloyl groups (CH₂=CHCO-) and methacryloyl groups (CH₂=C(CH₃)CO-) of the acrylate compound **AcC** and the potentially present epoxy groups of the at least one epoxy resin **EP** to the amine groups of the amine compound **AmC** is from 0.5 - 2.5.

2. The intumescent coating composition according to claim 1, wherein the X in the general formula (I) is selected from the group consisting of an n-valent hydrocarbon group having an alicyclic structure having 6 or more carbon atoms, an n-valent hydrocarbon group having an aromatic ring structure, an n-valent hydrocarbon group having an araliphatic structure, an n-valent hydrocarbon group having an aliphatic structure and an n-valent polyether group, wherein the before mentioned n-valent hydrocarbon groups may have at least one secondary amine structure inside thereof.

3. The intumescent coating composition according to claim 1 or 2, wherein the amine compound **AmC** represented by following formula (II), (III), (IV), (V), (VI) or (VII).
| | |
|---|---|
| 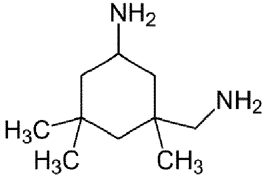 | (II) |
| 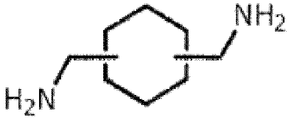 | (III) |
| 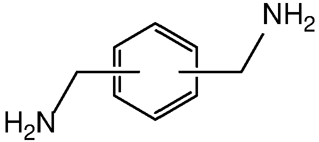 | (IV) |
| 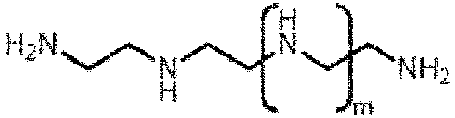 | (V) |
| 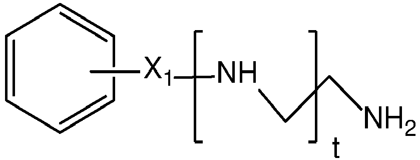 | (VI) |
| 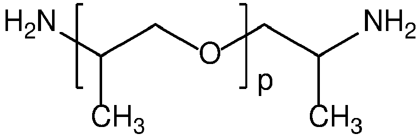 | (VII) |
| 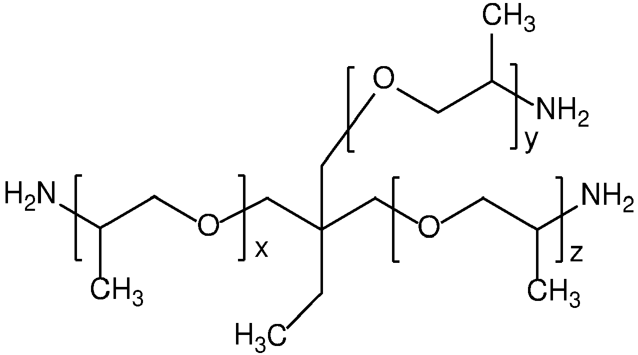 | (VIII) |
wherein m represents a number between 0 and 6, preferably between 2 and 3, p represents a number between 1 and 10, preferably between 2 and 3, t represents a number between 0 and 8, preferably 0, and the sum of (x + y + z) represents a number between 3 and 20, preferably between 5 and 6, and
X₁ represents an n-valent organic group having 1 to 10 carbon atoms, preferably X₁ is CH₃.

4. The intumescent coating composition according to claim 3, wherein the amine compound **AmC** represented by formula (II), (III), (IV), (V) or (VI).

5. The intumescent coating composition according to any of the proceeding claims, wherein the at least one acrylate compound **AcC** has one or more acryloyl groups (CH₂=CHCO-) in the molecule.

6. The intumescent coating composition according to claim 5, wherein the at least one acrylate compound **AcC** has 2-5, preferably 2-4, acryloyl groups (CH₂=CHCO-) in the molecule.

7. The intumescent coating composition according to any of the proceeding claims, wherein the at least one acrylate compound **AcC** does not contain an acid group, especially selected from the group consisting of a carboxyl group, a phosphoric acid group and/or a sulfonic acid group.

8. The intumescent coating composition according to any of the proceeding claims, wherein the at least one acrylate compound **AcC** does not contain a OH group and/or an NH₂ group.

9. The intumescent coating composition according to any of the proceeding claims, wherein the at least one acrylate compound **AcC** is based on an aliphatic backbone that can contain ester and/or ether groups in the backbone.

10. The intumescent coating composition according to any of the proceeding claims, wherein the at least one acrylate compound **AcC** is based on a polyol, preferably selected from the list consisting of hexandiol, glycerol, trimethylolpropane, isoborneol, ditrimethylolpropane, pentaerythritol, and dipentaerythritol, or an alkoxylated, especially ethoxylated, polyol, said polyol preferably selected from the list consisting of glycerin, trimethylolpropane, ditrimethylolpropane, pentaerythritol tri(meth)acrylate, dipentaerythritol tetraacrylate, dipentaerythritol pentaacryltate, dipentaerythritol hexaacryltate, glycerol tracrylate, not limited to these, incl. derivatives of these and can involve combinations.

11. The intumescent coating composition according to any of the proceeding claims, wherein the at least one acrylate compound **AcC** is selected from hexanediol diacrylate, trimethylolpropane triacrylate, pentaerythritol triacrylate, isobornyl acrylate and/or pentaerythritol tetraacrylate, acylates based on methyl acrylate, ethyl acrylate, butyl acrylate, n-Amyl acrylate, isobornyl acrylate, isobutyl acrylate, tert-Butyl acrylate, hexyl acrylate, 2-ethylhexyl acrylate, 3,5,5-trimethylhexyl acrylate, 2-methoxyethyl acrylate, 2-phenoxyethyl acrylate, 4-tert-butylcyclohexyl acrylate, octyl acrylate, isodecyl acrylate, decyl acrylate, lauryl acrylate, tridecyl acrylate, octadecyl acrylate, behenyl acrylate, modifications or combinations thereof, further examples are diethylenglycoldi(meth)acrylate, triethylenglycoldi(meth)acrylate, or higher polyethylenglycoldi(meth)acrylates, dipropylenglykoldi(meth)acrylate, tripropylenglycoldi(meth)acrylate, or higher polypropylenglycoldi(methacrylates), butanedioldi(meth)acrylate, hexanedioldi(meth)acrylate, dodecandioldi(meth)acrylate, glycerinedi(meth)acrylate, or trimethylolpropanetri(meth)acrylate, especially suitable is trimethylolpropanetriacrylate, derivatives thereof but not limited to as well as combinations.

12. The intumescent coating composition according to any of the proceeding claims, wherein the intumescent coating composition, after mixing the component **A** with the component **B** for 10 seconds at 23°C has a viscosity at 23°C of 1 - 30 Pa · s, preferably 2 to 20 Pa · s, in particular 3 to 15 Pa · s, measured by means of a plate-plate viscometer at a shear rate of 100 s⁻¹.

13. The intumescent coating composition according to any of the proceeding claims, wherein intumescent coating composition contains less than 0.1 wt.-%, preferably less than 0.01 wt.-%, more preferably less than 0.001 wt.-%, based on the total weight of the intumescent coating composition, of at least one radically-polymerizable initiator, especially an azo compound which generates radicals on heating or organic peroxides.

14. The intumescent coating composition according to any of the proceeding claims, further comprising 5 - 30 wt.-% based on the total weight of the intumescent coating composition, of at least one inorganic filler, preferably selected from the group consisting of barite (barite), talc, quartz flour, quartz sand, silicon carbide, iron mica, dolomite, wollastonite, colemanite, kaolin, mica (potassium aluminum silicate), molecular sieve, aluminum oxide, zinc oxide, aluminum hydroxide, magnesium hydroxide, silica, cement, gypsum, fly ash, soot, graphite, organic and inorganic fibers and hollow spheres, especially talc, quartz powder, kaolin, titanium dioxide and aluminum hydroxide.

15. A coated article, comprising a component with the intumescent coating composition according to one of claims 1 to 14 applied thereon to protect the component from heat in the even of a fire, said component selected from weight bearing metal members, concrete, wood, electrical systems, tanks and/or vehicle parts, against heat in the event of a fire.

16. A method for protecting components, comprising the steps:
(i) providing the component,
(ii) optionally, applying a primer to the surface of the component,
(iii) applying the mixed intumescent coating composition according to one of claims 1 to 14 to the optionally primed surface of the component within the pot life,
(iv) optionally, applying a further layer of the mixed intumescent coating composition according to one of claims 1 to 14 to the cured layer within the pot life,
(v) optionally, repeating step (iv), and
(vi) optionally, applying a topcoat to the cured intumescent coating composition.

17. A coated article made by the method according to claim 16.

18. The coated article of claim 15, wherein the fire is selected from a cellulosic-, hydrocarbon-, jet-, pool-, battery, or other specified and non-specified fire scenarios.
